# EUROPEAN PATENT SPECIFICATION

(11) **EP 4 243 192 B1**
(45) Date of publication and mention of the grant of the patent: **03.12.2025**
(21) Application number: 22828684.5
(22) Date of filing: 20.06.2022
(51) Int. Cl.: H01M 50/564, H01M 50/566, H01M 50/557, H01M 50/531, H01M 4/134, H01M 10/052, H01M 4/02, H01M 50/536, H01M 50/533

(54) **METHOD FOR BONDING ELECTRODE TAB AND METAL LEAD, AND LITHIUM SECONDARY BATTERY**
VERFAHREN ZUM VERBINDEN EINER ELEKTRODENLASCHE UND EINES METALLLEITERS SOWIE LITHIUMSEKUNDÄRBATTERIE
PROCÉDÉ DE LIAISON DE LANGUETTE D'ÉLECTRODE ET DE FIL MÉTALLIQUE, ET BATTERIE SECONDAIRE AU LITHIUM

(30) Priority: 21.06.2021 KR 20210079944
(43) Date of publication of application: 13.09.2023
(73) Proprietor: LG Energy Solution, Ltd., Seoul 07335 (KR)
(72) Inventor: LEE, Jaegil, Daejeon 34122 (KR); PARK, Gi Su, Daejeon 34122 (KR); LEE, Hyunsoo, Daejeon 34122 (KR)
(74) Representative: Goddar, Heinz J.
(86) International application number: PCT/KR2022/008683
(87) International publication number: WO 2022/270837

(56) References cited:
- DE-A1- 102019 110 375
- KR-A- 20030 086 070
- KR-A- 20140 069 702
- KR-A- 20190 061 573
- KR-A- 20200 039 923
- KR-A- 20200 039 923
- KR-B1- 102 083 656

## Description

### [Technical Field]

This application is a National Stage Application of International Application No. PCT/KR2022/008683, filed on June 20, 2022, which claims the benefits of priorities based on Korean Patent Application No. 10-2021-0079944 filed on June 21, 2021 and Korean Patent Application No. 10-2022-0074655 filed on June 20, 2022.

The present disclosure relates to a method of bonding an electrode tab and a metal lead, and to a lithium secondary battery.

### [Background Art]

As interest in energy storage technology continues to increase, since its application is expanding from energy for mobile phones, tablets, laptops and camcorders to even energy for electric vehicles (EVs) and hybrid electric vehicles (HEVs), research and development of electrochemical devices are gradually increasing.

Among the electrochemical devices, the development of a lithium secondary battery capable of being charged/discharged and furthermore a lithium secondary battery has become a focus of attention. In recent years, in developing these batteries, in order to improve capacity density and specific energy, research and development for the design of new electrodes and batteries are being actively conducted.

In accordance with these trends, the lithium metal battery, which is being developed as a next-generation battery, has only lithium as the negative electrode. However, it is known that lithium has a low melting point compared to other metals, is soft and breaks easily, and there is a potential risk of explosion when exposed to air, making it difficult to develop as a battery.

In particular, it is known that bonding the lithium electrode tab and the metal lead of the lithium negative electrode is a very difficult task due to the brittle nature of the lithium electrode tab.

That is, in the case of a conventional lithium-ion battery, when performing tab welding, although the negative electrode (copper) or positive electrode (aluminum) tab and the lead (copper, nickel, etc.) are welded by ultrasonic welding, laser welding, or resistance welding method, it is difficult to apply this technique to the welding of the lithium electrode tab and the metal lead of the lithium negative electrode.

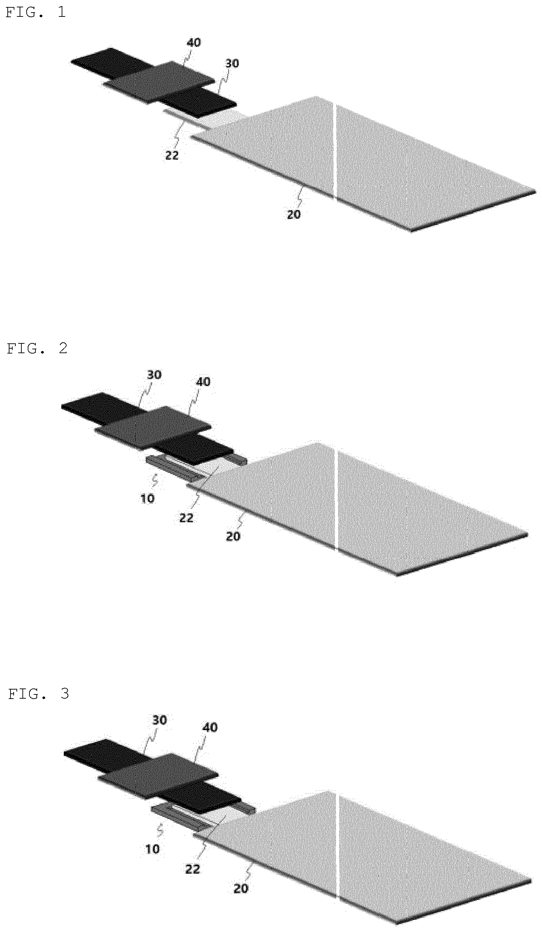

Therefore, in the prior art, a technique for bonding the metal lead and the lithium electrode tab by pressurizing them in a stacked state is being used, as shown in FIG. **1****.** However, in the case of using this method, it was difficult to adjust the bonding strength and the size of the bonding part because the lithium electrode tab is soft, and thus the extent to which the lithium electrode tab is pressed and spread varies depending on the magnitude of pressurized pressure and the pressurization time. That is, the shape of the outer periphery of the lithium electrode tab was formed differently for each operation, and the end of the outer periphery was also scraggily formed, making it difficult to form a bonding part in a uniform shape. Further, it was also difficult to uniformly form the thickness of the lithium electrode tab and the area of the bonding part.

Furthermore, the conventional method as described above also has a disadvantage that lithium adheres to the pressurizing device that presses the lithium electrode tab, causing bonding defects and thus increasing the time required for the bonding process, which results in low production efficiency of the battery.

### [Prior Art Document]

### [Patent Documents]

Korean Laid-open Patent Publication No. 10-2020-0009230 KR 2020 0039923 A DE 10 2019 110375 A1

### [Disclosure]

### [Technical Problem]

The present disclosure has been devised to solve the above problems of the prior art, and the present disclosure aims to provide a method of bonding an electrode tab and a metal lead, which can uniformly form the shape of the outer periphery of the lithium electrode tab, can uniformly form the thickness of the lithium electrode tab, and can reliably control the bonding area, and thus can easily adjust the bonding strength and the size of the bonding part between the lithium electrode tab and the metal lead, and minimize the resistance variation between cells, and greatly improve the process efficiency, and a lithium secondary battery including a bonding structure formed by the above method.

### [Technical Solution]

In order to achieve the above object, the present disclosure provides a method of bonding a lithium electrode tab and a metal lead, the method comprising:
(a) preparing a mold;
(b) positioning one end of the lithium electrode tab in a molding groove of the mold;
(c) stacking one end of the metal lead on an upper portion of the lithium electrode tab positioned in the molding groove; and
(d) pressurizing an upper portion of the metal lead stacked on the lithium electrode tab.

In addition, the present disclosure provides a lithium secondary battery comprising an electrode bonding structure of a lithium electrode tab and a metal lead, wherein both side portions in a longitudinal direction of the lithium electrode tab, the lithium electrode tab being bonded to the metal lead, are molded to have a plane.

### [Advantageous Effects]

The method of bonding the lithium electrode tab and the metal lead of the present disclosure can uniformly form the shape of the outer periphery of the lithium electrode tab, can uniformly form the thickness of the lithium electrode tab, and can reliably control the bonding area, and thus can easily adjust the bonding strength and the size of the bonding part between the lithium electrode tab and the metal lead.

In addition, the method of bonding the electrode tab and the metal lead significantly improves the process efficiency, provides an effect of minimizing bonding defects, and provides an effect of minimizing a resistance variation between cells.

The lithium secondary battery of the present disclosure comprises a bonding structure of a lithium electrode tab and a metal lead having excellent bonding strength, thereby providing improved quality.

### [Description of Drawings]

FIG. 1 is a perspective view schematically showing the method of bonding the lithium electrode tab and the metal lead according to related art.
FIGs. 2 and 3 are perspective views schematically showing embodiments of the method according to the present disclosure.
FIG. 4 is a perspective view schematically showing embodiments of a mold used for the method according to the present disclosure.
FIG. 5 is a diagram schematically illustrating a bonding mechanism of the method according to the present disclosure.

### [Best Mode]

Hereinafter, exemplary embodiments of the present disclosure will be described in detail with reference to the accompanying drawings so that those skilled in the art may easily implement the present disclosure. However, the present disclosure can be implemented in many different forms and is not limited to the embodiments described herein. Throughout the specification, same reference numerals are used for similar parts.

The method of bonding a lithium electrode tab and a metal lead of the present disclosure, as shown in FIGs. 2, 3 and 5, is characterized by comprising steps of:
(a) preparing the mold 10;
(b) positioning one end of the lithium electrode tab 22 in a molding groove 12 of the mold;
(c) stacking one end of the metal lead 30 on the lithium electrode tab 22 positioned in the molding groove 12; and
(d) pressurizing an upper portion of the metal lead 30 stacked on the lithium electrode tab.

In the related art, without using a mold, one end of the lithium electrode tab 22 and one end of the metal lead 30 are laminated, and then pressurized to bond the lithium electrode tab and the metal lead, as shown in FIG. 1.

However, in the case of using this method, it was difficult to control the bonding strength and the size of the bonding part because the properties of the lithium electrode tab are soft and thus the extent to which the lithium electrode tab is pressed and spread varies depending on the size of the pressurized pressure and the pressurization time. That is, the shape of the outer periphery of the lithium electrode tab was formed differently for each operation, and the end of the outer periphery was also formed scraggily, making it difficult to form a bonding part in a uniform shape. In addition, it was difficult to uniformly form the thickness of the lithium electrode tab and the area of the bonding part.

In addition, the thickness and area of the bonding part of the lithium electrode tab and the metal lead formed according to this method were not uniform, so there was a problem that the resistance deviation between cells was increased, and if the bonding area is insufficient, the bonding part was easily broken, resulting in many defects during the assembling of the cell.

Meanwhile, in the conventional method as described above, lithium adhered to the pressurizing device for pressurizing the lithium electrode tab, causing bonding defects, and also increasing the time required for the bonding process, thereby acting as a cause of lowering the production efficiency of the battery.

The present disclosure is characterized in that by bonding the lithium electrode tab 22 and the metal lead 30 using the mold 10, the bonding strength and the size of the bonding part can be easily adjusted. That is, in the bonding method of the present disclosure, the shape of the outer periphery of the lithium electrode tab 22 can be uniformly formed in the shape of the molding groove 12 formed in the mold 10 by using the mold 10, and also, it is possible to reliably control the bonding area between the lithium electrode tab and the metal lead by this effect. In addition, the thickness of the lithium electrode tab 22 also may be uniformly formed by the action of the mold 10. That is, since the wall forming the molding groove 12 in the mold 10 functions as a stopper during pressurization, the thickness of the electrode tab 22 may be uniformly formed even if the pressure on the metal lead 30 is not finely adjusted during pressurization.

In addition, in the bonding method of the present disclosure, since the lithium electrode tab 22 does not directly contact the pressurizing device, and only contacts the molding groove 12 of the mold, it provides an effect that does not cause a problem that lithium adheres to the pressurizing device, thereby causing bonding defects, and a problem that lithium adheres to the pressurizing device, thereby increasing the time required for the bonding process.

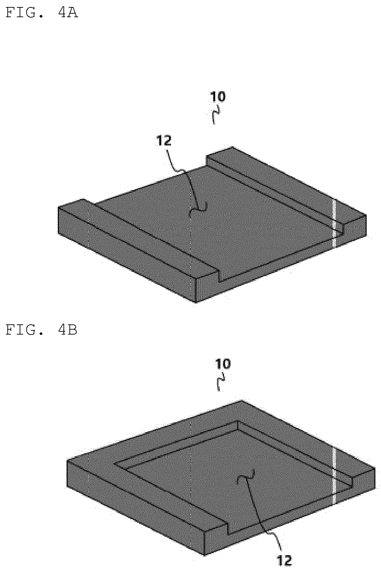

In one embodiment of the present disclosure, the molding groove 12 in step (a) may be formed in a continuous form from a fore-end to a distal-end in a direction to the metal lead 30 of the mold 10, as shown in FIG. 2 and FIG. 4A.

This type of molding groove 12 is preferable because it is possible to uniformly control the shape of both side portions in the longitudinal direction of the lithium electrode tab 22.

In one embodiment of the present disclosure, the molding groove 12 of step (a) may have a shape of a rectangular groove of which one side is opened, as shown in FIG. 3 and FIG. 4B. In this case, the opened one side may be located on a side of an electrode 20 coupled to the lithium electrode tab 22.

This type of molding groove 12 is preferable because it is possible to uniformly control not only both side portions in the longitudinal direction of the lithium electrode tab 22 but also the shape of the distal end.

In one embodiment of the present disclosure, the molding groove 12 may have a width of 0.5 to 1 time a width of the metal lead 30. If the width of the molding groove is larger than the width of the metal lead, it is undesirable because a portion of the lithium electrode tab 22 that does not bond with the metal lead 30 may be formed during the bonding, and the lithium electrode tab 22 may rises to a portion, where the metal lead 30 does not exist, during the pressurization, thereby causing a resistance deviation between cells.

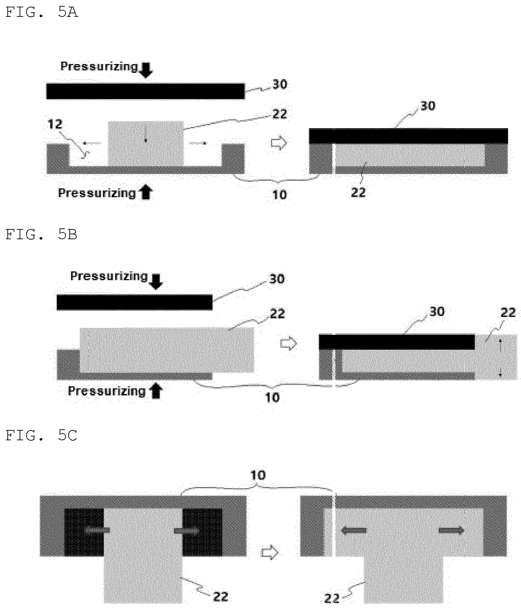

In one embodiment of the present disclosure, the depth of the molding groove 12 is preferably formed to be shallower than the thickness of the lithium electrode tab 22. The reason is that when the metal lead 30 is pressed to bond the metal lead 30 and the lithium electrode tab 22, the thickness of the lithium electrode tab 22, which is soft in nature, is thinned and spreads out in the lateral direction, and thus in order to uniformly form the thickness of the lithium electrode tab 22, it is necessary for the wall forming the molding groove 12 in the mold 10 to act as a stopper for stopping the pressurization of the metal lead 30, as shown in FIG. 5A.

In one embodiment of the present disclosure, the molding groove 12 is preferably formed to be wider than the width of the lithium electrode tab 22. The reason is that when pressurizing in the thickness direction, since the lithium electrode tab 22 is stretched in the lateral direction, a space for accommodating the extended portion must exist in the molding groove.

In one embodiment of the present disclosure, after step (d), the method may further comprise step of welding the lithium electrode tab and the metal lead. However, the welding step is not a necessarily required step. That is, since it is possible to bond the metal lead and the lithium electrode tab without welding by various bonding structures, the welding step may be selectively performed.

In one embodiment of the present disclosure, before step (b) positioning one end of the lithium electrode tab 22 in the molding groove 12 of the mold 10, the method may further comprise a step of applying a release agent to the molding groove 12 or covering a release film.

The bonding mechanism of the method of bonding the lithium electrode tab and the metal lead of the present disclosure is illustrated in FIG. 5. The diagram of FIG. 5A shows cross-sectional views of the lithium electrode tab 22 and the metal lead 30 in the width direction (transverse direction) before and after bonding, respectively. As shown in FIG. 5A, if pressure is applied in one or more directions of the metal lead 30 and the mold 10, the lithium electrode tab 22 having a soft property is formed in the shape of the molding groove 12 while expanding in the lateral direction, and at the same time, is bonded to the metal lead 30.

The diagram of FIG. 5B shows cross-sectional views of the lithium electrode tab 22 and the metal lead 30 in the length direction (longitudinal direction) before and after bonding, respectively. As shown in FIG. 5B, if pressure is applied in one or more directions of the metal lead 30 and the mold 10, the lithium electrode tab 22 having a soft property is expanded in the lateral direction as shown in FIG. 5A above, and at the same time, is formed in the form of a molding groove 12 while decreasing in thickness as shown in FIG. 5B. In addition, it is bonded to the metal lead 30 by this mechanism.

The diagram of FIG. 5C shows the deformation behavior of the lithium electrode tab 22 from the upper direction of the lithium electrode tab 22 by pressurization. As shown in FIG. 5C, if pressure is applied in one or more directions of the metal lead 30 and the mold 10, the lithium electrode tab 22 having a soft property is formed in the shape of the molding groove 12 while expanding in the lateral direction.

In addition, the present disclosure also relates to a lithium secondary battery comprising a stacked and bonded structure of a lithium electrode tab and a metal lead, wherein both side portions in a longitudinal direction of the lithium electrode tab, the lithium electrode tab being bonded to the metal lead, are molded to have a plane.

The plane may be a surface molded by a mold.

The contents described in the method of bonding the electrode tab and the metal lead are equally applicable to the lithium secondary battery. Therefore, the content overlapping with the above-described content is omitted.

In one embodiment of the present disclosure, an end surface of the lithium electrode tab bonded to the metal lead in a direction to the metal lead is molded to have a plane.

A uniform surface may be obtained by a mold.

In one embodiment of the present disclosure, an upper surface and a lower surface of the lithium electrode tab bonded to the metal lead may be molded to form planes to give a uniform thickness. In one embodiment of the present disclosure, the stacked and bonded structure may have a structure in which the lithium electrode tab 22 having a step difference formed on a surface thereof and the metal lead 30 are bonded at a lower end of the step difference while being stacked as shown in FIG. 5B.

In one embodiment of the present disclosure, the stacked and bonded structure may have a structure in which the lithium electrode tab 22 having a step difference formed on a surface thereof and the metal lead 30 are bonded at a lower end of the step difference while being stacked as shown in FIG. 5B, and the opposite surface to the surface of the lithium electrode tab 22 stacked with the metal lead 30 may also comprise a step difference.

In one embodiment of the present disclosure, the step difference may be formed by placing one end of the lithium electrode tab 22 in the molding groove 12 of the mold 10, stacking one end of the metal lead 30 on an upper portion of the lithium electrode tab 22, and pressurizing an upper portion of the metal lead 30 stacked on the lithium electrode tab, as shown in FIG. 5B.

In the above, an end surface of the metal lead bonded to the lithium electrode tab 22 may form a stacked and bonded structure by bonding to a surface of the step difference of the lithium electrode tab without a gap. The term "without a gap" as used herein means substantially no gap.

In one embodiment of the present disclosure, the lithium secondary battery may comprise a free-standing lithium electrode.

In one embodiment of the present disclosure, the lithium secondary battery may be manufactured by comprising a negative electrode that is a free-standing lithium electrode, a positive electrode, and an electrolyte and a separator interposed between the negative electrode and the positive electrode.

The lithium secondary battery of the present disclosure may be manufactured with a known method by a configuration known in the art except for the bonding structure of the lithium electrode tab and the metal lead. Hereinafter, specific examples of the positive electrode, the electrolyte, and the separator will be described.

### Positive electrode

The positive electrode included in the lithium secondary battery of the present disclosure may comprise a positive electrode active material, a binder, an electrically conductive material, and the like. The binder is a component that assists in the bonding between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and a mixture thereof.

The binder is usually added in an amount of 1 to 50 parts by weight, preferably 3 to 15 parts by weight, based on 100 parts by weight of the total weight of the positive electrode.

The electrically conductive material comprised in the positive electrode is not particularly limited as long as it does not cause side reactions in the internal environment of the lithium-sulfur battery and has excellent electrical conductivity while not causing chemical changes in the battery. The electrically conductive material may typically be graphite or electrically conductive carbon, and for example, but is not limited to, graphite such as natural graphite or artificial graphite; carbon black such as acetylene black, Ketjen black, Denka black, thermal black, channel black, furnace black, lamp black, thermal black, etc.; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; may be used alone or in a mixture of two or more thereof.

The electrically conductive material is typically added in an amount of 0.5 to 50 parts by weight, preferably 1 to 30 parts by weight based on 100 parts by weight of total weight of the positive electrode.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare the positive electrode of the present disclosure. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), and an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched one, porous body, foam or the like.

### Separator

The separator is interposed between the positive electrode and the negative electrode to prevent a short circuit therebetween and serves to provide a passage for the movement of lithium ions. As the separator, olefin-based polymers such as polyethylene and polypropylene, glass fibers, etc. may be used in the form of a sheet, a multi-membrane, a microporous film, a woven fabric or a non-woven fabric, but are not limited thereto. On the other hand, when a solid electrolyte such as a polymer (e.g., organic solid electrolyte, inorganic solid electrolyte, etc.) is used as the electrolyte, the solid electrolyte may also serve as a separator.

### Electrolyte

A solid electrolyte or a liquid electrolyte may be used as the electrolyte, and, for example, a non-aqueous electrolyte solution (non-aqueous organic solvent) may be used as the liquid electrolyte. As the non-aqueous electrolyte solution, carbonate, ester, ether, or ketone may be used alone or in combination of two or more, but is not necessarily limited thereto. For example, aprotic organic solvents such as dimethyl carbonate, diethyl carbonate, dipropyl carbonate, methylpropyl carbonate, ethylpropyl carbonate, methylethyl carbonate, ethylene carbonate, propylene carbonate, butylene carbonate, γ-butylolactone, n-methyl acetate, n-ethyl acetate, n-propyl acetate, phosphoric acid triester, dibutyl ether, N-methyl-2-pyrrolidinone, 1,2-dimethoxy ethane, tetrahydroxy Franc, tetrahydrofuran derivatives such as 2-methyl tetrahydrofuran, dimethylsulfoxide, formamide, dimethylformamide, dioxolane and derivatives thereof, acetonitrile, nitromethane, methyl formate, methyl acetate, trimethoxy methane, sulfolane, methyl sulfolane, 1,3-dimethyl-2-imidazolidinone, methyl propionate, and ethyl propionate may be used, but are not limited thereto.

A lithium salt may be further added to the electrolyte solution (so-called non-aqueous electrolyte solution containing lithium salt), and the lithium salt may be a known lithium salt that is well soluble in a non-aqueous electrolyte solution, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, lithium lower aliphatic carboxylate, lithium tetraphenyl borate, and lithium imide, etc., but is not necessarily limited thereto.

The lithium secondary battery of the present disclosure may be manufactured according to a conventional method in the art. For example, it can be manufactured by putting a porous separator between the positive electrode and the negative electrode and injecting a non-aqueous electrolyte solution.

### [Description of Symbol]

- 10:: Mold
- 12:: molding groove
- 20:: Lithium electrode
- 22:: Lithium electrode tab
- 30:: Metal lead
- 40:: Electrode lead film

## Claims

1. A method of bonding a lithium electrode tab (22) and a metal lead (30), the method comprising:
(a) preparing a mold (10);
(b) positioning one end of the lithium electrode tab (22) in a molding groove (12) of the mold (10);
(c) stacking one end of the metal lead (30) on an upper portion of the lithium electrode tab (22) positioned in the molding groove (12); and
(d) pressurizing an upper portion of the metal lead (30) stacked on the lithium electrode tab (22),
wherein the depth of the molding groove (12) is formed to be shallower than the thickness of the lithium electrode tab (22).

2. The method according to claim 1, wherein the molding groove (12) in step (a) is continuously formed from a fore-end to a distal-end in a direction towards the metal lead (30) of the mold (10).

3. The method according to claim 1, wherein the molding groove (12) of step (a) has a shape of a rectangular groove of which one side is opened, and the opened one side is located on a side of an electrode (20) coupled to the lithium electrode tab (30).

4. The method according to claim 2 or 3, wherein the molding groove (12) has a width of 0.5 to 1 time a width of the metal lead (30).

5. The method according to claim 1, wherein the method further comprises welding the lithium electrode tab (22) and the metal lead (30) after step (d).

6. The method according to claim 1, wherein the method further comprises applying a release agent to the molding groove (12) or covering the molding groove (12) with a release film before step (b).

7. A lithium secondary battery comprising a stacked and bonded structure of a lithium electrode tab (22) and a metal lead (30), wherein both side portions in a longitudinal direction of the lithium electrode tab (22), the lithium electrode tab (22) being bonded to the metal lead (30), are molded to have a plane,
wherein the stacked and bonded structure includes a structure in which the lithium electrode tab (22) having a step difference formed on a surface thereof and the metal lead (30) are bonded at a lower end of the step difference while being stacked.

8. The lithium secondary battery according to claim 7, wherein the opposite surface to the surface of the lithium electrode tab (22) stacked with the metal lead (30) also comprises a step difference.

9. The lithium secondary battery according to claim 7 or 8, wherein the step difference is formed by placing one end of the lithium electrode tab (22) in a molding groove (12) of a mold (10), stacking one end of the metal lead (30) on an upper portion of the lithium electrode tab (22), and pressurizing an upper portion of the metal lead (30) stacked on the lithium electrode tab (22).

10. The lithium secondary battery according to claim 7, wherein an end surface of the metal lead (30) bonded to the lithium electrode tab (22) is bonded to a surface of the step difference of the lithium electrode tab (22) without a gap.

11. The lithium secondary battery according to claim 7, wherein an end surface of the lithium electrode tab (22) bonded to the metal lead (30) in a direction towards the metal lead (30) is molded to have a plane.

12. The lithium secondary battery according to claim 7, wherein an upper surface and a lower surface of the lithium electrode tab (22) bonded to the metal lead (30) are molded to form planes to give a uniform thickness.

13. The lithium secondary battery according to claim 7, wherein the lithium secondary battery comprises a free-standing lithium electrode (20).

## Patentansprüche

1. Verfahren zum Verbinden einer Lithiumelektrodenlasche (22) und einer Metallleitung (30), wobei das Verfahren umfasst:
(a) Herstellen einer Form (10);
(b) Positionieren eines Endes der Lithiumelektrodenlasche (22) in einer Formnut (12) der Form (10);
(c) Stapeln eines Endes der Metallleitung (30) auf einen oberen Abschnitt der Lithiumelektrodenlasche (22), die in der Formnut (12) positioniert ist; und
(d) Druckbeaufschlagen eines oberen Abschnitts der Metallleitung (30), die auf die Lithiumelektrodenlasche (22) gestapelt ist,
wobei die Tiefe der Formnut (12) so ausgebildet ist, dass sie flacher als die Dicke der Lithiumelektrodenlasche (22) ist.

2. Verfahren nach Anspruch 1, bei dem die Formnut (12) in Schritt (a) kontinuierlich von einem vorderen Ende zu einem distalen Ende in einer Richtung zu der Metallleitung (30) der Form (10) ausgebildet wird.

3. Verfahren nach Anspruch 1, bei dem die Formnut (12) von Schritt (a) eine Form einer rechteckigen Nut aufweist, von der eine Seite geöffnet ist, und die geöffnete eine Seite auf einer Seite einer Elektrode (20) angeordnet ist, die mit der Lithiumelektrodenlasche (30) gekoppelt ist.

4. Verfahren nach Anspruch 2 oder 3, bei dem die Formnut (12) eine Breite von dem 0,5-bis 1-fachen einer Breite der Metallleitung (30) aufweist.

5. Verfahren nach Anspruch 1, bei dem das Verfahren ferner das Schweißen der Lithiumelektrodenlasche (22) und der Metallleitung (30) nach Schritt (d) umfasst.

6. Verfahren nach Anspruch 1, bei dem das Verfahren ferner das Aufbringen eines Trennmittels auf die Formnut (12) oder das Bedecken der Formnut (12) mit einem Trennfilm vor Schritt (b) umfasst.

7. Lithiumsekundärbatterie, die eine gestapelte und verbundene Struktur einer Lithiumelektrodenlasche (22) und einer Metallleitung (30) umfasst, wobei beide Seitenabschnitte in einer Längsrichtung der Lithiumelektrodenlasche (22), wobei die Lithiumelektrodenlasche (22) mit der Metallleitung (30) verbunden ist, so geformt sind, dass sie eine Ebene aufweisen,
wobei die gestapelte und verbundene Struktur eine Struktur umfasst, bei der die Lithiumelektrodenlasche (22), die einen auf einer Oberfläche davon ausgebildeten Stufenunterschied aufweist, und die Metallleitung (30) an einem unteren Ende des Stufenunterschieds verbunden sind, während sie gestapelt sind.

8. Lithiumsekundärbatterie nach Anspruch 7, bei der die gegenüberliegende Oberfläche zu der Oberfläche der Lithiumelektrodenlasche (22), die mit der Metallleitung (30) gestapelt ist, auch einen Stufenunterschied umfasst.

9. Lithiumsekundärbatterie nach Anspruch 7 oder 8, bei der der Stufenunterschied durch Platzieren eines Endes der Lithiumelektrodenlasche (22) in einer Formnut (12) einer Form (10), Stapeln eines Endes der Metallleitung (30) auf einen oberen Abschnitt der Lithiumelektrodenlasche (22) und Druckbeaufschlagen eines oberen Abschnitts der Metallleitung (30), die auf die Lithiumelektrodenlasche (22) gestapelt ist, ausgebildet wird.

10. Lithiumsekundärbatterie nach Anspruch 7, bei der eine Endoberfläche der Metallleitung (30), die mit der Lithiumelektrodenlasche (22) verbunden ist, mit einer Oberfläche des Stufenunterschieds der Lithiumelektrodenlasche (22) ohne einen Spalt verbunden ist.

11. Lithiumsekundärbatterie nach Anspruch 7, bei der eine Endoberfläche der Lithiumelektrodenlasche (22), die mit der Metallleitung (30) in einer Richtung zu der Metallleitung (30) verbunden ist, so geformt ist, dass sie eine Ebene aufweist.

12. Lithiumsekundärbatterie nach Anspruch 7, bei der eine obere Oberfläche und eine untere Oberfläche der Lithiumelektrodenlasche (22), die mit der Metallleitung (30) verbunden ist, so geformt sind, dass sie Ebenen bilden, um eine gleichmäßige Dicke zu ergeben.

13. Lithiumsekundärbatterie nach Anspruch 7, bei der die Lithiumsekundärbatterie eine freistehende Lithiumelektrode (20) umfasst.

## Revendications

1. Procédé de liaison d'une languette d'électrode au lithium (22) et d'un câble métallique (30), le procédé consistant à :
(a) préparer un moule (10) ;
(b) positionner une extrémité de la languette d'électrode au lithium (22) dans une rainure de moulage (12) du moule (10) ;
(c) empiler une extrémité du câble métallique (30) sur une partie supérieure de la languette d'électrode au lithium (22) positionnée dans la rainure de moulage (12) ; et
(d) pressuriser une partie supérieure du câble métallique (30) empilée sur la languette d'électrode au lithium (22),
dans lequel la profondeur de la rainure de moulage (12) est formée pour être inférieure à l'épaisseur de la languette d'électrode au lithium (22).

2. Procédé selon la revendication 1, dans lequel la rainure de moulage (12) à l'étape (a) est formée en continu d'une extrémité avant à une extrémité distale dans une direction vers le câble métallique (30) du moule (10).

3. Procédé selon la revendication 1, dans lequel la rainure de moulage (12) de l'étape (a) a une forme d'une rainure rectangulaire dont un côté est ouvert, et le côté ouvert est situé sur un côté d'une électrode (20) couplée à la languette d'électrode au lithium (30).

4. Procédé selon la revendication 2 ou 3, dans lequel la rainure de moulage (12) a une largeur de 0,5 à 1 fois une largeur du câble métallique (30).

5. Procédé selon la revendication 1, dans lequel le procédé consiste en outre à souder la languette d'électrode au lithium (22) et le câble métallique (30) après l'étape (d).

6. Procédé selon la revendication 1, dans lequel le procédé consiste en outre à appliquer un agent de démoulage à la rainure de moulage (12) ou à couvrir la rainure de moulage (12) avec un film de démoulage avant l'étape (b).

7. Batterie secondaire au lithium comprenant une structure liée et empilée d'une languette d'électrode au lithium (22) et d'un câble métallique (30), dans laquelle les deux parties latérales dans une direction longitudinale de la languette d'électrode au lithium (22), la languette d'électrode au lithium (22) étant liée au câble métallique (30), sont moulées pour avoir un plan,
dans laquelle la structure liée et empilée inclut une structure dans laquelle la languette d'électrode au lithium (22) ayant une différence de niveau formée sur une surface de celle-ci et le câble métallique (30) sont liés à une extrémité inférieure de la différence de niveau pendant l'empilement.

8. Batterie secondaire au lithium selon la revendication 7, dans laquelle la surface opposée à la surface de la languette d'électrode au lithium (22) empilée avec le câble métallique (30) comprend aussi une différence de niveau.

9. Batterie secondaire au lithium selon la revendication 7 ou 8, dans laquelle la différence de niveau est formée en plaçant une extrémité de la languette d'électrode au lithium (22) dans une rainure de moulage (12) d'un moule (10), en empilant une extrémité du câble métallique (30) sur une partie supérieure de la languette d'électrode au lithium (22) et en pressurisant une partie supérieure du câble métallique (30) empilée sur la languette d'électrode au lithium (22).

10. Batterie secondaire au lithium selon la revendication 7, dans laquelle une surface d'extrémité du câble métallique (30) liée à la languette d'électrode au lithium (22) est liée à une surface de la différence de niveau de la languette d'électrode au lithium (22) sans espacement.

11. Batterie secondaire au lithium selon la revendication 7, dans laquelle une surface d'extrémité de la languette d'électrode au lithium (22) liée au câble métallique (30) dans une direction vers le câble métallique (30) est moulée pour avoir un plan.

12. Batterie secondaire au lithium selon la revendication 7, dans laquelle une surface supérieure et une surface inférieure de la languette d'électrode au lithium (22) liée au câble métallique (30) sont moulées pour former des plans pour donner une épaisseur uniforme.

13. Batterie secondaire au lithium selon la revendication 7, dans laquelle la batterie secondaire au lithium comprend une électrode au lithium autonome (20).
